# EUROPEAN PATENT APPLICATION

(11) **EP 1 176 377 A1**
(43) Date of publication of application: **30.01.2002**
(21) Application number: 00116099.3
(22) Date of filing: 27.07.2000
(51) Int. Cl.: F25D 29/00, G06F 17/60

(54) **Automatic system for generating shopping lists**

(71) Applicant: WHIRLPOOL CORPORATION, Benton Harbor Michigan 49022 (US)
(72) Inventor: Bellinetto, Enrico, c/o Whirlpool Europe s.r.l, 21025 Comerio (IT); Schaefer, Martin, c/o Whirlpool Europe s.r.l, 21025 Comerio (IT); Braggion, Davide, c/o Whirlpool Europe s.r.l, 21025 Comerio (IT)
(74) Representative: Guerci, Alessandro

(57) **Abstract**

An automatic system for generating data from foodstuffs and perishable goods, particularly with reference to automatic systems associated to a refrigerator or freezer, has means (4) for detecting the data on remotely accessible data media, each associated with a product item, and it further comprises a data input device (5) which allows the user to insert additional products data and/or to define a shopping list, and a microprocessor device (1) able to store either products data or additional data inserted by the user and able to use all such data for defining an updated shopping list.

## Description

The present invention relates to an automatic system for generating data from foodstuffs and perishable goods, particularly with reference to automatic systems associated to a refrigerator or freezer.

A freezer having compartments for the insertion of deep-frozen goods and remotely accessible data media is known from EP-A-0974798. In this known technical solution the freezer has at least one antenna and/or reader that detects the data on the data medium and its storage position and indicates and/or outputs it in optical and/or acoustic form. The above data media can be produced with the items or attached manually by the user.

It is an object of the present invention to provide an automatic system of the above type which is more user friendly and which has more flexibility in the environment of an "intelligent home".

According to the invention, the automatic system is characterised by the features reported in the appended claims. The automatic system according to the invention has preferably a device able to recognise kind, quantity and expiration date of the products under analysis, such device being preferably associated to a home appliance. This invention accepts keyboard, touch-screen, Automated Data Capture (ADC) devices and human voice as input sources for the additional data without preferences. An elaboration device (like a PC or custom microprocessor system) process data input and, using database stored into local memory or external server is able to help user to generate, modify, organise, print and deliver shopping list. Feedback to user can be provided via visual (printer or video screen) or audio (loudspeaker) output. With the name shopping list, is here intended a list with all foods the user can usually buy for example in a shop or superstore. Normally, shopping list is prepared by customer before going to a supermarket, to remember all foods to be bought. Food and other perishable goods have an expiration date. With the concept "replenishment" is intended a method to find and replace expired foods.

ADC (Automatic Data Capture system like code bar or Radio Frequency Identification "RFID") are used from producer to store data used mainly during production and retail operation. According to the present invention, ADC is used to provide to the system a simple way to collect information on available products. One or more bar code and/or RFID reader is placed inside house (preferred solution is built it in or near the refrigerator or the storeroom). Reader is connected in some way to the elaboration system (for example via RF or power-line bi-directional serial link) and transmits information contained in the product label or tag. Barcode and RFID data stored into product labels have not a standard format and can vary from each supplier. Data coming from ADC input are compared with data stored on ADC database to extract usable information. All information related to bought products are stored in a "Home Database", this database containing information about products bought from the user and stored at home. Expired, used or removed products are deleted from this database. Additional information to be stored into ADC or Home Database can be provided to the elaboration system via voice, touch-screen, keyboard or can be downloaded from producer or retailer web-sites.

Audio input can be realised with a single microphone or array of microphone, with or without on-board processing (for example microphone can incorporate a Digital Signal Processor DSP used for noise cancellation). Purpose of the audio input is to collect voice command and/or information from user voice and sent it to the elaboration system (in analogue or digital form). Elaboration system will incorporate a voice recognition engine able to extract information from the audio input. Voice database, incorporating words or sentences models, is used from the elaboration system to recognise information data and or command. Depending on selected voice recognition technology, this invention can be speaker independent or speaker dependent system. Using speaker recognition technology, this invention can also be used to prevent not authorised user to change information stored in the database (child lock). Speaker recognition permits to set different shopping list for each user. Via telecom connection (elaboration system connected to phone line and/or Internet), the system according to the invention can be used in remote way. For example user can call voice assistant with mobile phone from the supermarket to ask, via voice recognition or short messages (SMS), for shopping list or to verify in house availability of some products.

The automatic system according to the present invention is able to build a database (ADC Database) with partial or full information about food products of interest for the user.

Voice can be used, in combination with an elaboration system and an Automated Data Capture (ADC) system (Example: barcode, RFID), to simplify replenishment issue. If refrigerator or store shelves knows what is present in the kitchen room (or in other rooms) and expiration date for products, voice system output can be used to alert user about expired goods and can suggest to replace them or to generate, modify or delivery order.

Touch-screen display can be used as input/output device. An output device can display information and can be used as input device touching the screen in correspondence of particular icons. Connection between touch-screen display and microprocessor device can be wireless (RF) or wired with digital signal communication. Wireless touch-screen display can be built on the appliance (for example mounted on refrigerator door), mounted on fix support somewhere into the room or mounted on a removable support. A preferred solution for touch-screen power supply is to provide it on the screen support.

Data not available in ADC or voice database needs to be inserted. Keyboard and mouse can be used to update database. Connection can be wired or wireless, wireless being the preferred solution.

Audio output (loudspeaker) is also present to support user during utilisation of the system according to the invention. An audio output can be located on the appliance (refrigerator, freezer or the like etc.) or somewhere in the room. Connection between audio output device (speaker) can be realised with wireless (RF, IR) or wired (power-line) methods. Audio output device can be realised with single or multiple speakers. Speaker can be active or passive type and connected to elaboration system in analogue or digital technology.

Printer device is also part of the system according to the invention, it is connected to the microprocessor device and it is used to print shopping list. Printer has not to be directly connected to the elaboration system defined by the microprocessor device, but can be connected to a remote elaboration system.

The invention is able to send shopping list to remote user via telephone line connection (internet). For example, consumer can access the elaboration system remotely from work office, download the shopping list and print it on an office printer. Internet connection can be also used to shop directly from the elaboration system. User can connect elaboration system with retailer web site and buy product listed. The automatic system according to the invention is able, if requested from the user, to automatically buy products listed on shopping list on preferred online retailer by using Internet connection. A portable module like a Personal Digital Assistant PDA, is also part of the system according to the invention. On the PDA the shopping list can be downloaded via wireless connection (before leaving home or remotely via telephone line). User can go to the shop with the PDA. The PDA can be used as visual (it shows the list) or audio output (a voice can synthesise products on the list) to help the user to find products. PDA can also be able to connect itself to the store computer and look for products location or for products availability.

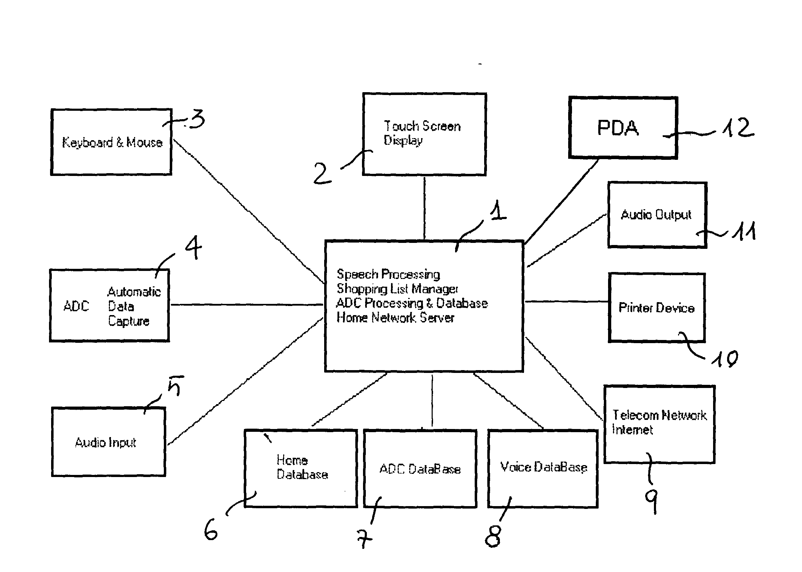

An automatic system in accordance with the invention will now be described, by way of example, with reference to the accompanying drawing which is a schematic view of the system.

With the reference numeral 1 it is indicated the central process unit of the system which includes a speech processing system able to detect and recognise the voice of the user and to deliver voice messages to the user, a shopping list manager able to generate and update shopping lists, an ADC processing and database unit, a home network server and a bar code processing & database. To the central unit 1 the following sub-systems are linked:
- a touch screen display 1,
- a keyboard & mouse 3,
- an automatic data capture ADC 4,
- an audio input unit 5,
- a home database 6,
- an ADC database 7,
- a voice database 8 which stores all the voice data of different users,
- a network Internet connection 9 through telephone lines,
- a printer device 10,
- an audio output unit 11, for instance a loud speaker, and
- a portable module 12.

The following is an example of how the automatic system works.

Shopping list and replenishment assistant of the central unit 1 checks regularly the home database 6. At the beginning of a new month the shopping list assistant finds, for instance, that three of five mozzarella are expiring in few days. When the user accesses the assistant, the system will warn him about expiration and will ask for instruction.

User accesses the system to add some cleaning soap to the shopping list. Via voice (through the audio input unit 5), the user asks to the assistant to add 3 packages of products to the shopping list. System checks the voice database 8 and if the products information are present, it will insert it in the list. If product is not in the database, system will ask additional information or connect itself to supplier server (through the unit 9) to download product information.

System informs the user that three mozzarella are expiring. User will take all the mozzarella out from the refrigerator. Assistant will inform via voice, about expiration date of each piece (system is using ADC reader 4 near the refrigerator to read product data). User puts the two not expiring products in the refrigerator and asks to the system to insert in the shopping list three pieces of mozzarella.

User asks the system to read via voice the entire shopping list. User adds other few things to the list and asks to download the list into the PDA to go to the shop. When user enter the shop, the PDA connect itself to the shop server and will adjust the list order according to the location of products in the store to minimise shopping time.

After shopping, user activates home ADC system to scan all new products. All new data are stored into the home database

## Claims

1. Automatic system for generating data from products, particularly foodstuffs and perishable goods, particularly with reference to automatic systems associated to a refrigerator or freezer, having means for detecting the data on remotely accessible data media, each associated with a product item, **characterised in that** it comprises:
- a data input device which allows the user to insert additional products data and/or to define a shopping list of products, and
- a microprocessor device able to store either products data or additional data inserted by the user and able to use all such data for defining an updated shopping list of products.

2. An automatic system according to claim 1, **characterised in that** the data input device is selected in the group consisting of keyboard, touch-screen, Automated Data Capture (ADC) devices and human voice.

3. An automatic system according to claim 1, **characterised in that** it includes an internet connection for delivering the list of products to a remote user.

4. An automatic system according to claim 3, **characterised in that** it is able to buy listed products automatically on online retailers by using internet connection.

5. An automatic system according to claim 1, **characterised in that** it includes a personal digital assistant on which the list of products can be downloaded via wireless connection.

6. An automatic system according to claim 5, **characterised in that** the personal digital assistant is able to connect to the shop server in order to update the order of the list of products to be bought according to the location of products in the shop for minimising shopping time.

7. An automatic system according to any of the pre claims, **characterised in that** it comprises audio input, voice recognition engine and voice database that can be used to control device and to update home database.

8. An automatic system according to any of the preceding claims, **characterised in that** it comprises an audio output that can be used to provide synthesised voice information and instruction to the user.

9. An automatic system according to any of the preceding claims, **characterised in that** it comprises a speaker recognition engine used to recognise user.
